# EUROPEAN PATENT APPLICATION

(11) **EP 3 467 180 A1**
(43) Date of publication of application: **10.04.2019**
(21) Application number: 17805879.8
(22) Date of filing: 01.06.2017
(51) Int. Cl.: D06F 33/02

(54) **RFID IDENTIFICATION FUNCTION-BASED WASHING MACHINE CONTROL METHOD AND WASHING MACHINE**

(30) Priority: 01.06.2016 CN 201610382150
(71) Applicant: Qingdao Haier Washing Machine Co., Ltd., Shandong 266101 (CN)
(72) Inventor: YIN, Junming, Qingdao Shandong 266101 (CN); HUANG, Zhenxing, Qingdao Shandong 266101 (CN); XU, Sheng, Qingdao Shandong 266101 (CN)
(74) Representative: Kraus & Weisert Patentanwälte PartGmbB
(86) International application number: PCT/CN2017/086898
(87) International publication number: WO 2017/206934

(57) **Abstract**

The present invention provides an RFID identification function-based washing machine control method and a washing machine having the RFID identification function. The control method includes: reading an ID number in an RFID tag of a piece of clothing to be washed and obtaining relevant information of each piece of clothing; displaying the tag information of each piece of clothing to be washed and receiving a selected-for-deletion message and a confirmation message; when the selected-for-deletion message is received, deleting a corresponding piece of clothing to be washed from a current relevant information set of pieces of clothing to be washed; and when the confirmation message is received, taking the relevant information of each piece of clothing to be washed in the current relevant information set of pieces of clothing to be washed as final data.

## Description

### TECHNICAL FIELD

The present invention relates to the technical field of washing machines, and in particular to an Radio Frequency Identification (RFID) function-based washing machine control method and an RFID identification function-based washing machine.

### BACKGROUND

In the related art, the methods for identifying clothing material of washing machine mainly include image identification and Radio Frequency Identification (RFID). The image recognition can only identify the category of clothing, such as denim, jacket and suit, but cannot accurately identify the material of clothing. Therefore, the application of the image identification in washing machines has a low value. The RFID identification technology requires to attach an RFID tag with an unique identification code on clothing. The identity (ID) number of the tag and the clothing information (including relevant information related to washing parameters) form an one-to-one correspondence. The washing machine can accurately acquire the clothing information as long as the ID number is identified. Therefore, the RFID identification is feasible for identifying the material of the clothing.

In the related art, the RFID technology applied in the washing machine mainly identify the RFID tag of the clothing, and does not take into account that the washing machine may misread when users put the clothing in, and the information of the clothing to be washed read by the washing machine is inaccurate. This reduces the accuracy of the washing parameters of the washing machine and affects the washing effect of the clothing to be washed.

### SUMMARY

The present invention provides an RFID identification function-based washing machine control method and RFID identification function-based washing machine, improving the accuracy of washing parameters of the washing machine.

The present invention adopts the following technical solutions.

In one aspect, the present invention provides an RFID identification function-based washing machine control method, including a reading step, a feedback step, a modification step and a confirmation step. The reading step includes reading an ID number in an RFID tag of each piece of clothing to be washed of at least one piece of clothing to be washed and obtaining relevant information of the each piece of clothing to be washed to form a current relevant information set of the at least one piece of clothing to be washed; the relevant information comprises flag information indicating the each piece of clothing to be washed. The feedback step includes displaying the flag information of the each piece of clothing to be washed of the current relevant information set of the at least one piece of clothing to be washed. The modification step includes deleting relevant information of a piece of clothing to be washed from the current relevant information set of the at least one piece of clothing to be washed when a selected-for-deletion message is received. The confirmation step includes determining a washing parameter based on final data when confirmation information is received; the final data comprises the relevant information of the each piece of clothing to be washed of the current relevant information set of the at least one piece of clothing to be washed.

Optionally, the relevant information includes at least one of clothing picture information, clothing item information or clothing brand information, and the flag information includes at least one of the clothing picture information, the clothing name information or the clothing brand information.

Optionally, the relevant information further includes at least one of clothing category information, clothing weight information, clothing material information or clothing color information.

Optionally, the step of displaying the flag information of the each piece of clothing to be washed of the current relevant information set of the at least one piece of clothing to be washed includes displaying the flag information of the each piece of clothing to be washed on a display screen of a washing machine, or displaying the flag information of the each piece of clothing to be washed through voice broadcasting.

Optionally, the selected-for-deletion message is transmitted when a delete button on the display screen of the washing machine is pressed or a preset contact gesture is received, or the selected-for-deletion message is transmitted when a preset voice instruction is received.

Optionally, in the modification step, the deleted relevant information of the piece of clothing to be washed is moved in a recycle bin. The modification step further includes restoring the deleted relevant information of the piece of clothing to be washed to the current relevant information set of the at least one piece of clothing to be washed when a restoration message is received.

Optionally, before the flag information is displayed or when the flag information is displayed, the feedback step further includes displaying a quantity of the at least one piece of clothing to be washed.

In another aspect, the present invention provides an RFID identification function-based washing machine, including an RFID identification system, a processing module, a display module and an information receiving end. The processing module is in communication connection with the RFID identification system. The processing module is in communication connection with the display module and a database. The database is configured to pre-store an ID number of each piece of clothing to be washed and relevant information corresponding to the ID number. The relevant information includes flag information indicating to the each piece of clothing to be washed. The information receiving end is in communication connection with the processing module. The RFID identification system is configured to read the ID number in an RFID tag of the each piece of clothing to be washed and transmit the ID number of the each piece of clothing to be washed to the database through the processing module. The processing module is configured to: receive the relevant information and control the display module to display the flag information of the each piece of clothing to be washed of a current relevant information set of the at least one piece of clothing to be washed ; when a selected-for-deletion message is received through the information receiving end, delete relevant information of a piece of clothing to be washed corresponding to the selected-for-deletion message, from the current relevant information set of the at least one piece of clothing to be washed; when a confirmation message is received through the information receiving end, determine a washing parameter based on final data; the final data include the relevant information of the each piece of clothing to be washed of the current relevant information set of the at least one piece of clothing to be washed.

Optionally, the database is configured to receive the ID number of a piece of clothing to be washed, match the ID number of the piece of clothing to be washed with at least one pre-stored ID number to obtain the relevant information corresponding to the ID number of the piece of clothing to be washed, and transmit the relevant information to the processing module.

Optionally, the RFID identification system includes an RFID antenna and an RFID reader in communication connection with the RFID antenna. The RFID antenna is configured to acquire an RFID tag signal of a piece of clothing to be washed and transmit the RFID tag signal to the RFID reader. The RFID reader is configured to read out an ID number in an RFID tag of the RFID tag signal, and transmit the ID number to the processing module. The processing module is arranged in a control panel of the washing machine. The washing machine is a drum washing machine, the RFID antenna is arranged under a door cushion of the washing machine, and the RFID antenna is pointed toward the door cushion of the washing machine, and the RFID reader is integrated on the control panel of the washing machine or the RFID reader is arranged independently of the control panel of the washing machine. The washing machine is a pulsator washing machine, the RFID antenna is arranged under a display screen on the washing machine tray of the washing machine, and the RFID antenna is inclined toward a washing drum, the RFID reader is integrated on the control panel of the washing machine or the RFID reader is arranged independently of the control panel of the washing machine.

Optionally, the database is arranged in the control panel of the washing machine, or the database is arranged in a server or a cloud platform.

The RFID function-based washing machine control method of the present invention includes a reading step, a feedback step, a modification step and a confirmation step. In the reading step, the ID number in the RFID tag of the piece of clothing to be washed is read, and the relevant information of each piece of clothing to be washed of a current relevant information set of the piece of clothing to be washed is obtained; the relevant information includes the flag information indicating the piece of clothing to be washed. In the feedback step, the flag information of each piece of clothing to be washed in the current relevant information set of the piece of clothing to be washed is displayed, and a selected-for-deletion message and a confirmation message may be received. In the modification step, when the selected-for-deletion message is received, the relevant information of the piece of clothing to be washed is deleted from the current relevant information set of the piece of clothing to be washed. In the confirmation step, when the confirmation message is received, the a washing parameter is determined based on final data; the final data include the relevant information of the each piece of clothing to be washed of the current relevant information set of the piece of clothing to be washed. Thus, after identifying the pieces of clothing to be washed, the control method displays the relevant information of the pieces of clothing to be washed in the current relevant information set of pieces of clothing to be washed to the user, and allow the user to delete the misidentified piece of clothing. In the case where a piece of clothing outside the washing machine (such as a piece of clothing worn by the user or stacked around the washing machine) is identified as the piece of clothing to be washed in the washing machine, the user can delete the relevant information of the misidentified piece of clothing to be washed from the current relevant information set of the pieces of clothing to be washed. In this way, the user select and confirm by himself to correct the relevant information set of the piece of clothing to be washed, thereby improving the accuracy of the washing parameters of the washing machine.

The RFID identification function-based washing machine of the present invention includes an RFID identification system and a processing module in communication connection with the RFID identification system. The washing machine further includes a display module, a deletion message receiving end and a confirmation message receiving end. The processing module is in communication connection with the display module and a database. The database is configured to pre-store an ID number of each piece of clothing and the relevant information corresponding to the ID number. The relevant information includes the flag information indicating the clothing. The deletion message receiving end and the confirmation message receiving end are in communication connection with the processing module. The RFID identification system reads the ID number in an RFID tag of each piece of clothing to be washed and transmit the ID number of the each piece of clothing to be washed to the database through the processing module. The database receives the ID number of a piece of clothing to be washed and match the ID number of the piece of clothing to be washed with the pre-stored ID number of clothing to obtain the relevant information corresponding to the ID number of the piece of clothing to be washed, and transmit the relevant information to the processing module. The processing module receives the relevant information and control the display module to display the flag information of each piece of clothing to be washed of a current relevant information set of pieces of clothing to be washed. When the processing module receives the deletion message through the deletion message receiving end, the processing module deletes relevant information of the piece of clothing to be washed corresponding to the deletion message from the current relevant information set of pieces of clothing to be washed. When the processing module receives the confirmation message through the confirmation message receiving end, the processing module determines the relevant information of each piece of clothing to be washed of the current relevant information set of pieces of clothing to be washed as the final data. Thus, after identifying the pieces of clothing to be washed, the washing machine displays the relevant information of the pieces of clothing to be washed in the current relevant information set of pieces of clothing to be washed to the user, and allow the user to delete the misidentified piece of clothing. In the case where a piece of clothing outside the washing machine (such as a piece of clothing worn by the user or stacked around the washing machine) is identified as the piece of clothing to be washed in the washing machine, the user can delete the relevant information of the misidentified piece of clothing to be washed from the current relevant information set of the pieces of clothing to be washed. In this way, the user select and confirm by himself to correct the relevant information set of the piece of clothing to be washed, thereby improving the accuracy of the washing parameters of the washing machine.

The present invention further provides a computer readable storage medium, on which computer-executable instructions are stored; the computer-executable instructions are used for performing any one of the methods described above.

The present invention further provides a computer program product including a computer program stored in a non-transitory computer readable storage medium, the computer program including program instructions; the program instructions, when executed by a computer, makes the computer perform any one of the methods described above

### BRIEF DESCRIPTION OF DRAWINGS

FIG. 1 is a schematic flow chart of an RFID identification function-based washing machine control method according to embodiment 1;
FIG. 2 is a flow chart of clothing identification in the washing machine control method of FIG. 1;
FIG. 3 is a diagram showing the module structure of an RFID identification function-based washing machine according to embodiment 2;
FIG. 4 is a structure diagram of an RFID identification function-based washing machine according to embodiment 2; and
FIG. 5 is a structure diagram of an RFID identification function-based washing machine according to embodiment 3.

In the drawings:
1. RFID antenna; 2. door of washing machine; 3. display screen of washing machine; 4. RFID identification system; 5. RFID reader; 6. RFID tag; 7. processing module; 8. database; 9. wireless module; 10. server or cloud platform; 11. display module; 12. information receiving end; 13. control panel of washing machine; 14: door cushion of washing machine; 15. washing machine tray; 16. washing drum.

### DETAILED DESCRIPTION

The technical solutions of the present invention will be further described below in conjunction with the accompanying drawings and specific embodiments. If no conflict exists, features of the following embodiments and examples may be combined with each other. Applicants have found that the washing machine using RFID technology in the related art mainly identifies the RFID tag of the clothing to be washed, and does not take into account that the washing machine may misread when users put the clothing in, and the information of the clothing to be washed read by the washing machine is inaccurate. This reduces the accuracy of the washing parameters of the washing machine and affects the washing effect of the clothing to be washed.

### Embodiment 1

In this embodiment, the RFID identification function-based washing machine control method includes the following steps.

In a reading step, an ID number in the RFID tag of one or more pieces of clothing to be washed is read, and relevant information of the each piece of clothing to be washed in a current relevant information set of the pieces of clothing to be washed is obtained. The relevant information of a piece of clothing to be washed includes flag information indicating the piece of clothing to be washed.

In a feedback step, the flag information of each piece of clothing to be washed in the current relevant information set of the pieces of clothing to be washed is displayed, and a selected-for-deletion message and a confirmation message are possibly received. The selected-for-deletion message is sent when the user needs to delete the relevant information of a certain piece of clothing, and the selected-for-deletion message includes a corresponding piece of clothing to be deleted. The confirmation message is sent when the user confirms that the pieces of clothing in the current relevant information set of the pieces of clothing to be washed are correct.

In a modification step, when the selected-for-deletion message is received, the relevant information of the piece of clothing to be washed corresponding to the selected-for-deletion message is deleted from the current relevant information set of the pieces of clothing to be washed.

In a confirmation step, when the confirmation message is received, the relevant information of the each piece of clothing to be washed in the current relevant information set of the pieces of clothing to be washed is taken as final data, and the final data is used for determining a washing parameter.

The control method displays the relevant information of pieces of clothing to be washed in the current relevant information set of pieces of clothing to be washed to the user after identifying the pieces of clothing to be washed, and allows the user to delete the misidentified piece of clothing. In the case where a piece of clothing to be washed outside the washing machine (such as a piece of clothing worn by the user or stacked around the washing machine) is identified as the piece of clothing to be washed in the washing machine, the user can delete the relevant information of the misidentified piece of clothing to be washed from the current relevant information set of the pieces of clothing to be washed. In this way, the user select and confirm by himself to correct the relevant information set of the piece of clothing to be washed, thereby improving the accuracy of the washing parameters of the washing machine.

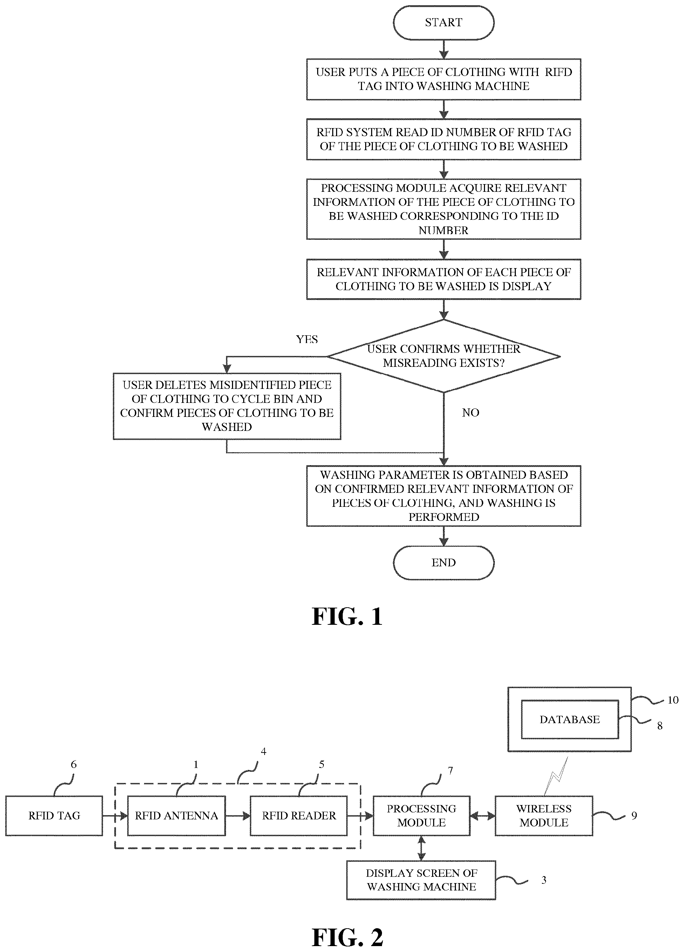

As shown in FIG. 1, the RFID tag is attached on the piece of clothing, which is resistant to high temperature and corrosion, and is washable. The RFID tag contains an ID number. The RFID tag may be an intrinsic tag sewn into the piece of clothing, or may be a tag attached by the user on the piece of clothing before the piece of clothing is washed. The ID number of the piece of clothing and the relevant information corresponding to the ID number are pre-stored in a database, and the relevant information includes flag information indicating the piece of clothing. The flag information includes at least one of clothing picture information, clothing item information or clothing brand information. In other words, the user may confirm the piece of clothing corresponding to the flag information based on one of or any combination of the above three pieces of information. The clothing picture information is the most intuitive information. In this embodiment, the clothing picture information may be used as the flag information, and when the user sees a picture of the piece of clothing, the piece of clothing can be identified.

The relevant information may, in addition to the flag information (e.g., at least one of the clothing picture information, the clothing item information or the clothing brand information), further include at least one of clothing category information, clothing weight information, clothing material information or clothing color information. In this embodiment, the relevant information may include the clothing picture information, the clothing item information, the clothing category information, the clothing weight information, the clothing material information and the clothing color information.

Optionally, in the embodiment, the flag information of each piece of clothing to be washed may be displayed on a display screen of the washing machine. When the flag information is the clothing picture information, the display screen of the washing machine displays the clothing picture information in the form of a picture. In other words, the picture of each piece of clothing is displayed, and the picture may be a line drawing or a color image. In addition, in other embodiments, the flag information of each piece of clothing to be washed may be displayed by voice broadcasting. The voice broadcasting corresponds to the flag information displayed in text form, such as the clothing item information and the clothing brand information.

Optionally, in the embodiment, a delete button, corresponding to the flag information of the each piece of clothing to be washed, may be set on the display screen of the washing machine. When the user presses the delete button, a processing module sends the selected-for-deletion message, and the selected-for-selection message is directed to the selected piece of clothing. Alternatively, a contact gesture (for example, sliding or clicking on the flag information) may be preset; and when a fingertip of the user slides on the flag information or clicks on the flag information, the processing module sends the selected-for-deletion message. The sent selected-for-deletion message is also directed to the selected piece of clothing. When the flag information of each piece of clothing to be washed is voice broadcasted, the question may be asked whether to delete the relevant information of this piece of clothing to be washed. If a preset voice instruction is received (for example, a keyword "delete"), the selected-for-deletion message is sent, and the selected-for-deletion message is also directed to the selected piece of clothing. Of course, the present invention may provide a selection function to the user and perform corresponding processing by combining at least one of the various human-computer interaction modes described above.

Optionally, in the embodiment, a confirmation button may be set on the display screen of the washing machine. When the user presses the confirmation button, the processing module sends the confirmation message. Alternatively, after the flag information of the each piece of clothing to be washed is voice broadcasted, the question may be asked whether to confirm. If a preset voice command (for example, a key word "confirm") is received, a confirmation message is sent. Of course, the present invention may provide a selection function to the user and perform corresponding processing by combining at least one of the various human-computer interaction modes described above.

Optionally, in the modification step, the relevant information of a deleted piece of clothing to be washed may be placed in a recycle bin, and a restoration message may be received. When the restoration message is received, the relevant information of the deleted piece of clothing to be washed is restored to the relevant information set of the pieces of clothing to be washed. The selection function may be provided to the user through the arranged restoration button, voice inquiry and the like.

Optionally, the quantity of the pieces of clothing to be washed in the current relevant information set of the pieces of clothing to be washed may be displayed at the same time as displaying the flag information or before displaying the flag information. If the quantity is correct, the user may directly determine that the pieces of clothing are not misread, and there is no need to view the flag information. The manner in which the quantity of the pieces of clothing to be washed is displayed may be the same as the manner in which the flag information is displayed, for example, in the form of text on the display screen of the washing machine, or through voice broadcasting.

The washing machine control method of the present embodiment is generally described below with reference to FIG. 1 and FIG. 2, taking an example where the clothing picture information serves as the flag information, the click on the flag information triggers the sending of the selected-for-deletion message, and the click on the confirmation button triggers the sending of the confirmation message.

In step S1, the reading step is performed.

When the user puts a piece of clothing to be washed into the washing machine, the RFID antenna 1 transmits a signal, and the RFID tag 6 receives the signal and is activated, so that the RFID tag 6 generates a signal at a different frequency (RFID tag signal). As such, the sub-steps as described below are performed for each RFID tag 6, that is, each piece of clothing to be washed.

In step S1.1, the RFID antenna 1 acquires the RFID tag signal of the piece of clothing to be washed, and transmits the RFID tag signal to an RFID reader 5.

In step S1.2, the RFID reader 5 reads the ID number of the RFID tag 6 in the RFID tag signal, and transmits the ID number to a processing module 7.

In step S1.3, the processing module 7 transmits the ID number to the database 8.

In step S1.4, the database 8 receives the ID number of the piece of clothing to be washed and matches the ID number with the stored ID numbers of pieces of clothing to be washed, so as to acquire relevant information of the piece of clothing to be washed corresponding to the ID number of the piece of clothing to be washed, and transmits the relevant information to the processing module. 7.

In step S1.5, the processing module 7 receives the relevant information of the piece of clothing to be washed transmitted by the database 8.

After the above steps S1.1 to S1.5 has been performed for each RFID tag 6, the relevant information of the each piece of clothing to be washed in a current relevant information set of pieces of clothing to be washed has been returned to the processing module 7.

In step S2, the feedback step is performed.

The clothing picture information of each piece of clothing to be washed, the quantity of the pieces of clothing to be washed and a confirmation button are displayed on the display screen 3 of the washing machine. After the flag information of each piece of clothing to be washed and the quantity of the pieces of clothing to be washed are displayed on the display screen 3 of the washing machine, the user may compare the clothing picture information displayed by the washing machine with the clothing placed by him. If any piece of clothing is read incorrectly, the user may click on the clothing picture information; or, if it is verified that all the pieces of clothing has been identified correctly, the user may click on the confirmation button.

In step S3, the modification step is performed.

When the processing module 7 receives the selected-for-deletion message, the relevant information of the piece of clothing to be washed corresponding to the selected-for-deletion message is deleted from the current relevant information set of the pieces of clothing to be washed. Thus, the clothing picture information of the corresponding piece of clothing to be washed disappears from the display screen and is placed in a recycle bin. If the correct clothing picture information is deleted by mistake, the user may enter the recycle bin to restore the clothing picture information.

In step S4, the confirmation step is performed.

When the confirmation message is received, the confirmation message indicates that the relevant information of the each piece of clothing to be washed in the current relevant information of the pieces of clothing to be washed is correct. Therefore, the relevant information of all pieces of clothing to be washed in the current relevant information of the pieces of clothing to be washed is taken as final data.

In step S5, the washing parameter determining step is performed.

The processing module 7 calculates a washing parameter based on the final data. The washing parameter includes at least one of water level, washing time, number of rinsing, dehydrating time, heating temperature, turn-to-stop ratio, dehydrating rotational speed, washing rotational speed, soaking time or detergent quantity.

After the steps described above, a washing operation is performed.

The RFID antenna 1 in step S1.1 and the RFID reader 5 in step S1.2 constitute an RFID identification system 4 for reading the ID number in the RFID tag 6 of the clothing to be washed.

In step S1.3, the database 8 may be an intrinsic module arranged in the washing machine, and the processing module 7 may process and send the ID number to the database 8, so as to match the ID number with the information stored in the database 8. The processing module 7 may be a processor, such as a CPU. As shown in FIG. 2, the database 8 may also be arranged in a server or cloud platform 10. The processing module 7 transmits the ID number to the server or cloud platform 10 through a wireless module 9, and receives the information fed back by the server or the cloud platform 10 through the wireless module 9. It can be understood that, in the above two manners, the former may adopt an offline mode, and the latter must adopt a wireless connection mode, and both may be applied to the washing machine control method of this embodiment.

### Embodiment 2

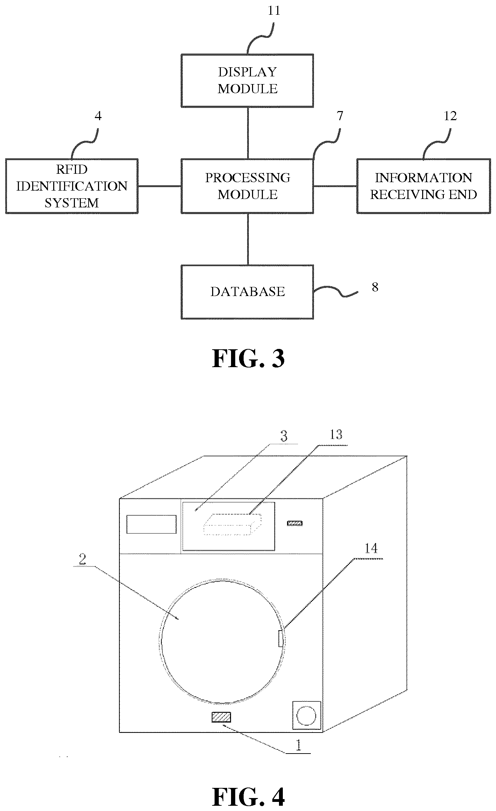

In this embodiment, an RFID identification function-based washing machine is provided, which is able to implement the washing machine control method of embodiment 1. The washing machine is a drum washing machine. As shown in FIG. 3, the washing machine includes an RFID identification system 4, a processing module 7, a display module 11 and an information receiving end 12 (including a deletion message receiving end and a confirmation message receiving end). The RFID identification system 4 and the processing module 7 are connected in communication. The processing module 7 is communicatively connected with the information receiving end 12, the display module 11 and the database 8. The database 8 pre-stores one or more ID numbers of one or more pieces of clothing and relevant information corresponding to the ID numbers. The relevant information includes flag information indicating to the corresponding piece of clothing. The RFID identification system 4 reads the ID number in the RFID tag of a piece of clothing to be washed and transmits the ID number of the piece of clothing to be washed to the database 8 through the processing module 7. The database 8 receives the ID number of the piece of clothing to be washed and matches the ID number with the stored ID numbers of pieces of clothing to obtain the relevant information of the piece of clothing corresponding to the ID number of the piece of clothing to be washed, and transmits the relevant information to the processing module 7. The processing module 7 controls the display module 11 to display the flag information of each piece of clothing to be washed in the current relevant information set of pieces of clothing to be washed, and receives the selected-for-deletion message and the confirmation message. The processing module 7 deletes the relevant information of the corresponding piece of clothing to be washed from the current relevant information set of the pieces of clothing to be washed when the selected-for-deletion message is received through the information receiving end 12. The processing module 7 takes the relevant information of each piece of clothing to be washed in the current relevant information set of the pieces of clothing to be washed as the final data when the confirmation message is received through the information receiving terminal 12. The selected-for-deletion message may be sent when the user needs to delete a certain misidentified piece of clothing, and the confirmation message may be sent when the user confirms that the relevant information of each piece of clothing to be washed in the current relevant information set of the piece of clothing to be washed is correct. The final data are used for determining the washing parameter. Therefore, after identifying the pieces of clothing to be washed, the washing machine displays the relevant information of the pieces of clothing to be washed in the current relevant information set of pieces of clothing to be washed to the user, and allow the user to delete the misidentified piece of clothing. In the case where a piece of clothing outside the washing machine (such as a piece of clothing worn by the user or stacked around the washing machine) is identified as the piece of clothing to be washed in the washing machine, the user can delete the relevant information of the misidentified piece of clothing to be washed from the current relevant information set of the pieces of clothing to be washed. In this way, the user select and confirm by himself to correct the relevant information set of the piece of clothing to be washed, thereby improving the accuracy of the washing parameters of the washing machine.

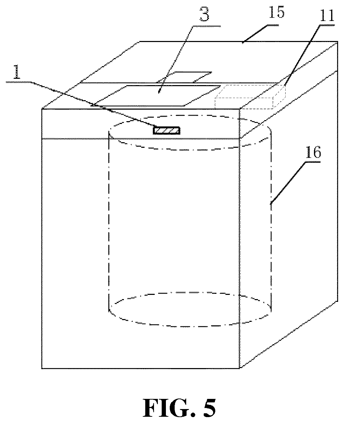

Optionally, in the embodiment, as shown in FIG. 2, the RFID identification system 4 includes an RFID antenna 1 and an RFID reader 5 in communication connection with the RFID antenna 1. The RFID antenna 1 transmits a signal, and the RFID tag 6 receives the signal and is activated, so that the RFID tag 6 generates a signal at a different frequency (RFID tag signal). The RFID antenna 1 acquires the RFID tag signal of the piece of clothing to be washed, and the RFID tag signal is transmitted to the RFID reader 5. The RFID reader 5 reads the ID number of the RFID tag 6 in the RFID tag signal and transmits the ID number to a processing module 7. As shown in FIG. 4, the processing module 7 may be arranged in the washing machine control panel 13, and the RFID antenna 1 may be arranged under a door cushion 14 of the washing machine or a door 2 of the washing machine shown in FIG. 5, and the RFID antenna 1 is pointed toward the door of the washing machine. The RFID reader 5 may be integrated in a control panel 13 of the washing machine or the RFID reader 5 may be arranged independently of the washing machine control panel 13 of the washing machine. The processing module 7 may also be arranged in the control panel 13 of the washing machine.

In this embodiment, the display module 11 may adopt the display screen 3 of the washing machine. The flag information may be the clothing picture information, the clothing item information and/or the clothing brand information, and the flag information may be displayed on the display screen 3 of the washing machine in the form of text or pictures. In this embodiment, the clothing picture information is used as the flag information, and as long as the user sees the clothing picture, the user can identify the piece of clothing. Accordingly, the relevant information may further include clothing category information, clothing weight information, clothing material information, clothing color information, and clothing item information, in addition to the flag information. In other embodiments, the display module 11 may adopt a voice broadcast device.

Optionally, an information receiving end 12 (for example, a heat sensor or pressure sensor) may be arranged in the display screen 3 of the washing machine, and a delete button corresponding to the flag information of each piece of clothing to be washed is arranged to be processed. When the user presses the delete button, the processing module 7 sends a selected-for-deletion message. Alternatively, a contact gesture may be predefined, such as sliding or clicking on the flag information. When a fingertip of the user slides on the flag information or clicks on the flag information, the processing module 7 sends the selected-for-deletion message. The present invention may provide a selection function to the user and perform corresponding processing by various human-computer interaction modes. For example, a voice broadcast device including a voice receiving end may be provided in the washing machine, and the voice receiving end serves as the information receiving end 12. When the flag information of the each piece of clothing to be washed is transmitted by voice broadcast, it is inquired whether to delete the relevant information of this piece of clothing to be washed. If the processing module 7 receives a preset voice instruction (for example, a keyword "delete"), it is deemed to the reception of the selected-for-deletion message.

Optionally, the processing module 7 may place the relevant information of the deleted piece of clothing to be washed in the recycle bin and may receive restoration information. When the restoration information is received, the relevant information of the deleted piece of clothing to be washed is restored to the current relevant information set of the pieces of clothing to be washed. The user selection function may be provided to the user through the arranged restoration button, voice inquiry and the like.

Optionally, a confirmation button may be arranged on the display screen 3 of the washing machine. When the user presses the confirmation button, the information receiving end transmits a confirmation message to the processing module 7. After the flag information of each piece of clothing to be washed is voice broadcasted, the question may be asked whether to confirm. If the processing module 7 receives a preset voice instruction (for example, a keyword "confirm"), it is deemed to the reception of the confirmation message. The present invention may provide a selection function to the user and perform corresponding processing by combining the various human-computer interaction modes described above.

Optionally, the processing module 7 may also control the display module 11 to display the quantity of the pieces of clothing to be washed in the current relevant information set of the pieces of clothing to be washed at the same time as displaying the flag information or before displaying the flag information. If the quantity is correct, the user may directly determine that the pieces of clothing that are not misread, and there is no need to view the flag information. The manner in which the quantity of the pieces of clothing to be washed is displayed may be the same as the manner in which the flag information is displayed, for example, in the form of text on the display screen 3 of the washing machine, or through voice broadcasting.

Further, as shown in FIG. 3 and FIG. 4, the database 8 may be arranged in the control panel 13 of the washing machine, and the processing module 7 may process and send the ID number to the database 8, so as to match the ID number with the information stored in the database 8. Alternatively, as shown in FIG. 2, the database 7 may also arranged in a server or cloud platform 10. The processing module 7 transmits the ID number to the server or cloud platform 10 through the wireless module 9, and receives the information fed back by the server or the cloud platform 10 through the wireless module 9. It can be understood that, in the above two manners, the former may adopt an offline mode, and the latter must adopt a wireless connection mode.

The RFID identification function-based washing machine described above may execute the washing machine control method in the first embodiment, and the execution process will not be described herein.

### Embodiment 3

As shown in FIG. 5, this embodiment differs from the embodiment 2 in that the washing machine is a pulsator washing machine, and the RFID antenna 1 is arranged under the display screen 3 of the washing machine on the washing machine tray 15, and the RFID antenna 1 is inclined toward the washing drum 16.

The embodiment further provides a computer readable storage medium, storing computer-executable instructions for performing the above method.

The embodiment further provides a computer program product including a computer program stored in a non-transitory computer readable storage medium. The computer program includes program instructions. The program instructions, when executed by a computer, make the computer to perform any of the methods described above.

### INDUSTRIAL APPLICABILITY

The present invention provides an Radio Frequency Identification (RFID) function-based washing machine control method and washing machine When a piece of clothing to be washed, which has not been placed in the washing machine, is identified as the piece of clothing to be washed in the washing machine, the user can delete the misidentified piece of clothing to be washed from a current relevant information set of the pieces of clothing to be washed, which improves the accuracy of the washing parameters of the washing machine.

## Claims

1. An Radio Frequency Identification (RFID) function-based washing machine control method, comprising:
a reading step, which comprises reading an identity (ID) number in an RFID tag of each piece of clothing to be washed of at least one piece of clothing to be washed and obtaining relevant information of the each piece of clothing to be washed to form a current relevant information set of the at least one piece of clothing to be washed, wherein the relevant information comprises flag information indicating the each piece of clothing to be washed;
a feedback step, which comprises displaying the flag information of the each piece of clothing to be washed of the current relevant information set of the at least one piece of clothing to be washed;
a modification step, which comprises deleting relevant information of a piece of clothing to be washed from the current relevant information set of the at least one piece of clothing to be washed when a selected-for-deletion message is received; and
a confirmation step, which comprises determining a washing parameter based on final data when confirmation information is received, wherein the final data comprise the relevant information of the each piece of clothing to be washed of the current relevant information set of the at least one piece of clothing to be washed.

2. The control method according to claim 1, wherein the relevant information comprises at least one of clothing picture information, clothing item information or clothing brand information, and the flag information comprises at least one of the clothing picture information, the clothing name information or the clothing brand information.

3. The control method according to claim 2, wherein the relevant information further comprises at least one of clothing category information, clothing weight information, clothing material information or clothing color information.

4. The control method according to claim 1, wherein the step of displaying the flag information of the each piece of clothing to be washed of the current relevant information set of the at least one piece of clothing to be washed comprises:
displaying the flag information of the each piece of clothing to be washed on a display screen of a washing machine; or
displaying the flag information of the each piece of clothing to be washed through voice broadcasting.

5. The control method according to claim 1, wherein the selected-for-deletion message is transmitted when a delete button on a display screen of a washing machine is pressed or a preset contact gesture is received; or
the selected-for-deletion message is transmitted when a preset voice instruction is received.

6. The control method according to claim 1, wherein in the modification step, the deleted relevant information of the piece of clothing to be washed is moved in a recycle bin,
wherein the modification step further comprises restoring the deleted relevant information of the piece of clothing to be washed to the current relevant information set of the at least one piece of clothing to be washed when a restoration message is received.

7. The control method according to claim 1, wherein before the flag information is displayed or when the flag information is displayed, the feedback step further comprises displaying a quantity of the at least one piece of clothing to be washed.

8. An Radio Frequency Identification (RFID) function-based washing machine, comprising:
an RFID identification system;
a processing module, which is in communication connection with the RFID identification system;
a display module, which is in communication connection with the processing module, wherein the processing module is in communication connection with a database configured to pre-store an identity (ID) number of each piece of clothing to be washed of at least one piece of clothing and relevant information corresponding to the ID number, the relevant information comprises flag information indicating the each piece of clothing to be washed; and
an information receiving end, which is in communication connection with the processing module ,
wherein the RFID identification system is configured to:
read the ID number in an RFID tag of the each piece of clothing to be washed and transmit the ID number of the each piece of clothing to be washed to the database through the processing module;
the processing module is configured to:
receive the relevant information and control the display module to display the flag information of the each piece of clothing to be washed of a current relevant information set of the at least one piece of clothing to be washed;
when a selected-for-deletion message is received through the information receiving end, delete relevant information of a piece of clothing to be washed corresponding to the selected-for-deletion message from the current relevant information set of the at least one piece of clothing to be washed; and
when a confirmation message is received through the information receiving end, determine a washing parameter based on final data, wherein the final data comprise the relevant information of the each piece of clothing to be washed of the current relevant information set of the at least one piece of clothing to be washed.

9. The washing machine according to claim 8, wherein the database is configured to receive the ID number of a piece of clothing to be washed, match the ID number of the piece of clothing to be washed with at least one pre-stored ID number of clothing to obtain the relevant information corresponding to the ID number of the piece of clothing to be washed, and transmit the relevant information to the processing module.

10. The washing machine according to claim 8, wherein the RFID identification system comprises an RFID antenna and an RFID reader in communication connection with the RFID antenna;
the RFID antenna is configured to acquire an RFID tag signal of a piece of clothing to be washed and transmit the RFID tag signal to the RFID reader;
the RFID reader is configured to read out an ID number in an RFID tag of the RFID tag signal, and transmit the ID number to the processing module, wherein the processing module is arranged in a control panel of the washing machine;
wherein the washing machine is a drum washing machine, the RFID antenna is arranged under a door cushion of the washing machine, and the RFID antenna is pointed toward the door cushion of the washing machine, and the RFID reader is integrated on the control panel of the washing machine or the RFID reader is arranged independently of the control panel of the washing machine; or
the washing machine is a pulsator washing machine, the RFID antenna is arranged under a display screen on the washing machine tray of the washing machine, and the RFID antenna is inclined toward a washing drum, the RFID reader is integrated on the control panel of the washing machine or the RFID reader is arranged independently of the control panel of the washing machine.

11. The washing machine according to claim 8, wherein the database is arranged in a control panel of the washing machine; or
the database is arranged in a server or a cloud platform.

12. A computer-readable storage medium, on which computer-executable instructions are stored, wherein the computer-executable instructions are configured to perform the method of any one of claims 1-7.
